# EUROPÄISCHE PATENTSCHRIFT

(11) **EP 2 931 936 B1**
(45) Veröffentlichungstag und Bekanntmachung des Hinweises auf die Patenterteilung: **27.04.2016**
(21) Anmeldenummer: 13814869.7
(22) Anmeldetag: 11.12.2013
(51) Int. Cl.: C23C 18/12

(54) **VERFAHREN ZUR BEHANDLUNG DER OBERFLÄCHE EINES METALLISCHEN SUBSTRATS**
METHOD FOR TREATING THE SURFACE OF A METALLIC SUBSTRATE
PROCÉDÉ DE TRAITEMENT DE LA SURFACE D'UN SUBSTRAT MÉTALLIQUE

(30) Priorität: 11.12.2012 EP 12196593
(43) Veröffentlichungstag der Anmeldung: 21.10.2015
(73) Patentinhaber: Amag Rolling GmbH, 5282 Braunau am Inn - Ranshofen (AT)
(72) Erfinder: MELZER, Carsten, A-5122 Weng/Überackern (AT); GROHMANN, Torsten, A-5280 Braunau am Inn (AT); SCHUBERT, Ulrich, A-2752 Wöllersdorf (AT); MEYER, Sarah, A-1100 Wien (AT)
(74) Vertreter: Jell, Friedrich
(86) Internationale Anmeldenummer: PCT/EP2013/076299
(87) Internationale Veröffentlichungsnummer: WO 2014/090911

(56) Entgegenhaltungen:
- WO-A1-2011/156438

## Beschreibung

### Technisches Gebiet

Die Erfindung betrifft ein Verfahren zur Behandlung der Oberfläche eines metallischen Substrats aus Aluminium oder einer Aluminiumlegierung.

### Stand der Technik

Aus dem Stand der Technik sind zahlreiche Verfahren zur Beschichtung der Oberfläche eines metallischen Substrats bekannt. Hierfür werden verschiedene bekannte Precursoren, üblicherweise Organoalkoxysilane, Zirkonalkoxide und als Komplexbildner wirkende organische Säuren in alkoholischer Lösung, etwa von Ethanol oder Isopropanol verwendet. Nachteilig ist die Handhabung derartiger Verfahren nicht zuletzt aufgrund der Verwendung der genannten Alkohole, da deren Siedepunkte vergleichsweise niedrig sind. Dies führt unter anderem dazu, dass aufgrund von Konzentrationsänderungen die Kontrollierbarkeit des Beschichtungsprozesses sinkt. Es muss demnach ein vergleichsweise hoher technischer Aufwand betrieben werden, um arbeitsplatzrelevante Sicherheits- und Gesundheitsvorschriften erfüllen zu können. Um das Verfahren zu verbessern, zeigt die US 5,939,197 ein Verfahren zur Oberflächenbehandlung von Metall, im Speziellen von Titan- und Aluminiumlegierungen (z.B.: der AA 7xxx Gruppe), wobei hierfür diverse wässrige Lösungen von Organoalkoxysilanen und Zirkonalkoxiden vorgeschlagen werden. Bei diesem Verfahren werden Zirkonalkoxide mit kurzkettigen organischen Resten oder Gemische mit diversen chemischen Additiven, sowie ein Organoalkoxysilan mit einer reaktiven organischen Gruppe und Essigsäure verwendet. Bei den Organoalkoxysilanen handelt es sich dabei gezielt um solche, die kurze Alkoxy-Reste, die aus 2 bis 5 Kohlenstoffatomen bestehen, wobei einer dieser vier Reste eine zusätzliche chemisch reaktive Gruppe, etwa einen 3-Aminopropyl- oder etwa einen 3-Glycidoxypropyl-Rest, aufweist. Auf diese Weise wird versucht, eine gut haftende und dauerhafte Beschichtung zur Verfügung zu stellen. Trotzdem erweist sich ein derartiges Verfahren als nachteilig, da sich beim Mischen der Ausgangsverbindungen zunächst ein zweiphasiges System ausbildet, das mehrere Stunden zum Homogenisieren benötigt. Außerdem können Alkohole mit niedrigem Siedepunkt, die im Laufe des Sol-Gel-Prozesses gebildet oder als Lösungsmittel zugesetzt werden, die Kontrollierbarkeit des Verfahrens durch stetige Veränderung der Zusammensetzung des Reaktionsgemisches verschlechtern. Zudem stellen sich verflüchtigende Alkoholdämpfe ein erhebliches Gefährdungspotenzial dar.

### Darstellung der Erfindung

Die Erfindung hat sich daher die Aufgabe gestellt, ausgehend vom Stand der Technik ein Verfahren zur Behandlung der Oberfläche eines metallischen Substrats, insbesondere Blechs, aus Aluminium oder einer Aluminiumlegierung zur Verfügung zu stellen, das auf dieser nicht nur eine gut haftende und korrosionsbeständige Sol-Gel-Beschichtung aus einer Mischung auf Wasserbasis mit hoher und einstellbarer Topfzeit ermöglicht, sondern auch kostengünstig und einfach handzuhaben ist. Insbesondere sollte auch die Eignung des Verfahrens bei großflächiger Anwendung auf metallischen Substraten Berücksichtigung finden.

Die Erfindung löst die gestellte Aufgabe hinsichtlich des Verfahrens durch die Merkmale des Anspruchs 1.

Weist die Mischung auf Wasserbasis ein Sol auf, aufweisend Alkoxysilane mit der allgemeinen chemischen Formel Si(OR)₄, wobei R lineare oder verzweigte, kurzkettige Kohlenwasserstoffreste mit wenigstens einer Hydroxylgruppe ist, kann auf elegante und einfache Weise die Wasserlöslichkeit eines als Precursor für Sol-Gel-Verfahren verwendbare Organosilans sichergestellt werden. Gleiches gilt auch für ebenfalls im Sol enthaltene Organoalkoxysilane mit der allgemeinen chemischen Formel R"Si(OR')₃, wobei R' lineare oder verzweigte, kurzkettige Kohlenwasserstoffreste mit wenigstens einer Hydroxylgruppe und R" eine organische Gruppe mit einer Glycidoxy-, Merkapto-, Amino-, Methacryl-, Allyl- und/oder Vinyl-Gruppe ist. Dies kann einen wesentlichen Vorteil darstellen, um Ziele des Verfahrens, nämlich insbesondere niedrige Kosten, vereinfachte Durchführung, hohe Prozesssicherheit, Vermeidung von Explosionsgefahr, Gesundheitsschutz und nicht zuletzt eine großflächige Anwendbarkeit zu ermöglichen. Diese Mischung, wobei diese bereit durch das Sol selbst gebildet werden kann - kann nämlich mit vergleichsweise einfachen Verfahrensschritten auf die Oberfläche des metallischen Substrats, insbesondere Blechs, aus Aluminium oder einer Aluminiumlegierung aufgebracht und wenigstens bereichsweise unter Ausbildung einer mit dem metallischen Substrat verbundenen Sol-Gel-Beschichtung ausgehärtet werden. Somit kann ein kostengünstiges Behandeln der Oberfläche eines metallischen Substrats mit Methoden der Bandbeschichtung, insbesondere Rollcoatern, aber auch im Spritz-, Tauch oder Abquetschverfahren ermöglicht werden.
Vorteilhaft ist die mögliche Durchführung des erfindungsgemäßen Verfahrens in wässriger Lösung, also mit einer Mischung auf Wasserbasis, auch ohne zusätzliche Zugabe eines emulgierenden Lösungsmittels. So wird trotz Verwendung von Wasser von Anfang an eine einphasige Precursorlösung gebildet, was den Ablauf des Verfahrens erheblich vereinfacht. Da ohnehin mehrwertige Alkohole mit ausreichend emulgierender Wirkung gebildet werden, sind auch im weiteren Verlauf des Sol-Gel Prozesses nachteilige Phasentrennungen vermeidbar. So zeichnet sich das erfindungsgemäße Verfahren durch hohe Variationsmöglichkeit hinsichtlich der chemischen Zusammensetzung der Mischung und/oder der Zugabe von Verbindungen im Zuge des Sol-Gel-Prozesses aus.
Dabei hat sich bei dem erfindungsgemäßen Verfahren zusätzlich überraschend herausgestellt, dass die im Zuge des Sol-Gel-Prozesses stattfindenden Hydrolyse- und Kondensationsprozesse, die bekanntermaßen Konkurrenzreaktionen im zeitlichen Verlauf sind, besonders vorteilhaft ablaufen. Dies betrifft nicht zuletzt die unerwartet lange und gezielt veränderbare Topfzeit, also der Zeit bis zum Beginn des Gelierens im Sol-Gel-Prozess. Durch die erhöhte Topfzeit kann ein wesentliches Ziel des Verfahrens, nämlich dessen erleichterte Durchführung etwa bei Behandlung großer metallischer Oberflächen, erreicht werden. Des Weiteren hat sich gezeigt, dass das Verfahren wegen der Verwendung von Wasser und den relativ hohen Siedepunkten der aus den Precursoren gebildeten mehrwertigen Alkohole für großflächige Anwendung und Auftragung auf erhöhte Temperaturen aufweisenden metallischen Substraten geeignet ist, ohne dass es zur vorzeitigen Gelierung und damit zur Ausbildung von inhomogenen Filmen kommt.
In diesen Zusammenhängen kann davon ausgegangen werden, dass im Verlauf der Gel-Bildung auf der Oberfläche eines metallischen Substrats - unter anderem durch die Verwendung von Wasser ohne zusätzliche Lösungsmittel und durch die Eigenschaften der mehrwertigen Alkohole, etwa deren geringe Flüchtigkeit - die verschiedenen, parallel ablaufenden Gleichgewichtsreaktionen von Hydrolyse und Kondensation positiv beeinflusst werden. Die bei der Reaktion gebildeten mehrwertigen Alkohole wirken zudem als Verlaufsmittel und führen so zu einer gleichmäßigeren Beschichtung. Dadurch und auch wegen der verlängerten Topfzeit eignet sich das erfindungsgemäße Verfahren auch für die Behandlung größerer Oberflächen und auch für ein Aufbringen mithilfe von Walzen (Bandbeschichtung bzw. Coil Coating, Can Coating), was sich gegenüber dem Stand der Technik, in denen primär Tauchbeschichtungen oder ein eher kleindimensionierter, handwerklicher Auftrag erfolgen, besonders auszeichnet.
Als Ergebnis können letztendlich die chemischen Eigenschaften, die strukturelle Morphologie und die Bindung der Sol-Gel-Beschichtung auf einem metallischen Substrat verbessert werden. Dies kann nicht zuletzt durch eine gleichmäßige Sol-Gel-Beschichtung auf der Oberfläche eines metallischen Substrats gezeigt werden. Insbesondere wird durch die Anwesenheit der mehrwertigen Alkohole die Tendenz zur Rissbildung beim Trocknen bei höherer Temperatur deutlich herabgesetzt. So wird erfindungsgemäß ermöglicht, dass eine Oberfläche eines metallischen Substrats bereits mit einer relativ dünnen Sol-Gel-Schicht deckend beschichtet werden kann, was nicht nur hinsichtlich einer weiteren Bearbeitung, etwa einem Kleben, entscheidende Vorteile nach sich ziehen kann - unter anderem da die mechanische Belastbarkeit, etwa von Verklebungen über Sol-Gel-Beschichtungen, mit steigender Dicke der Sol-Gel-Beschichtung sinkt. Des Weiteren werden bei der Freisetzung der mehrwertigen Alkohole die Explosionsgrenzen weniger leicht erreicht.

Im Allgemeinen wird erwähnt, dass ein metallisches Substrat beispielsweise eine Oberflächenschicht eines Halbzeugs, Gussteils, Fertigteilerzeugnisses, Bauteils oder Bauelements oder dergleichen darstellen kann. Insbesondere kann sich die Erfindung für ein Blech als Halbzeug eignen. Diese Gegenstände können jedoch auch vollständig aus dem metallischen Substrat aus Aluminium oder einer Aluminiumlegierung bestehen.

Vorteilhaft ist R" eine organische Gruppe - insbesondere als linearer oder verzweigter, kurzkettiger Kohlenwasserstoffrest - mit einer Glycidoxy-, Merkapto-, Amino-, Methacryl-, Allyl- und/oder Vinyl-Gruppe. So können neben der anorganischen Reaktivität des Sols oder Gels mit der Oberfläche eines metallischen Substrats auch organofunktionelle Gruppen zur Verfügung gestellt werden. Damit ist eine verbesserte Reaktivität mit einem organischen Substrat, etwa mit einer auf die Sol-Gel-Beschichtung aufgebrachten Klebeschicht oder Lackschicht erreichbar, wobei obenstehende Vorteile des Verfahrens beibehalten werden können.

Der Vollständigkeit halber wird erwähnt, dass unter kurzkettigem Kohlenwasserstoffrest ein Rest mit 2 bis 6 Kohlenstoffatomen verstanden werden kann. Als Precursor sind Bestandteile der Mischung mit Organosilanen zu verstehen.

Ist R ein 2-Hydroxyethylrest, kann Vorherstehendes besonders vorteilhaft genutzt/erreicht werden. So kann das Verfahren nämlich nicht nur mit kostengünstig herzustellenden Precursoren durchgeführt, sondern auch deren besonders gute Wasserlöslichkeit erreicht werden. Zudem wird aus derartigen Precursoren während des Sol-Gel-Prozesses Ethylenglykol gebildet, das mit Wasser sehr gut mischbar ist und einen Siedepunkt von 196 Grad Celsius aufweist. Durch den niedrigen Dampfdruck verflüchtigt sich dieses aus der Mischung nur in geringen Mengen was unter anderem zu einer zeitlich stabileren Zusammensetzung der Beschichtungslösung und damit zu längeren Topfzeiten führt. Ethylenglykol konnte sich auch als jener mehrwertige Alkohol herausstellen, der besonders gute Ergebnisse hinsichtlich der Ausbildung einer Sol-Gel-Beschichtung auf einem metallischen Substrat ermöglicht.

Gleiches gilt, wenn R' ein 2-Hydroxyethylrest ist.

Besonders gute Ergebnisse können mit dem erfindungsgemäßen Verfahren erzielt werden, wenn das Sol aufweist: 5 bis 10 Gewichts-% Tetrakis(2-hydroxyethoxy)silan und 0,5 bis 3,5 Gewichts-% 3-Glycidoxypropytris(2-hydroxyethoxy)si lan.

Weist die Mischung zusätzlich Metallalkoxide, insbesondere von Zirkon, Aluminium und/oder Titan, mit der allgemeinen chemischen Formel M (OR"")ₓ auf, wobei R'" ein linearer oder verzweigter, kurzkettiger Kohlenwasserstoffrest, insbesondere ein n-Propyl-, iso-Propyl- und/oder n-Butyl-Rest, ist, kann die Oberfläche eines metallischen Substrats besonders widerstandsfähig gegenüber Korrosion beschichtet werden. Hierbei werden bekannte Effekte genutzt, um die korrosionshemmenden Einflüsse im Netzwerk der Sol-Gel-Beschichtung zu verbessern.
Es ist also gezeigt, dass das Verfahren - wie bereits ausgeführt - eine hohe Variabilität bezüglich der verwendbaren chemischen Substanzen gewährleisten kann.

Weist R'" wenigstens eine Hydroxylgruppe auf, können die vorstehend genannten Vorteile hinsichtlich Wasserlöslichkeit, niedrigem Dampfdruck, verbesserter Gelbildung etc. erreicht werden. Insbesondere ergibt sich dadurch ein Sol-Gel-Prozess mit Komponenten, die ähnliche chemische Eigenschaften aufweisen, was die genannten Vorteile des Verfahrens zusätzlich verstärken kann.

Enthält die Mischung einen Komplexbildner, insbesondere eine organische Säure oder ein ß-Diketon, kann die Reaktivität der Metallalkoxide im Zuge des erfindungsgemäßen Verfahrens der Organoalkoxysilane angepasst und damit der Sol-Gel-Prozess besser kontrolliert werden. Dies kann sich als entscheidender Faktor hinsichtlich der erwähnten vorteilhaften Sol-Gel-Beschichtung eines metallischen Substrats erweisen.

Hierbei hat sich eine Mischung ausgezeichnet, die aufweist:
0,3 bis 4,5 Gew.-% Metallalkoxide, insbesondere Tetra-(n-propyl)zirkonat oder Tetra-(iso-propyl)titanat und
0,3 bis 9 Gew.-% eines Komplexbildners, insbesondere Essigsäure.

Weist die Oberfläche des metallischen Substrats Aluminium oder eine Aluminiumlegierung auf, oder besteht dieses Substrats daraus, kann das erfindungsgemäße Verfahren besonders vorteilhaft angewendet werden. Es kann auf diesen nicht nur eine besonders fest haftende und beständige Beschichtung erreicht werden, es kommen auch die Vorteile bei geforderter großflächiger Anwendung wie verringerte Kosten, verlängerte Topfzeit und verfahrenstechnische Vorteile zum Tragen.

Wird die Oberfläche der Sol-Gel-Beschichtung mit einer organischen Schicht verbunden, kann sich das erfindungsgemäße Verfahren für zahlreiche Anwendungsbereiche eignen. Durch die beschriebenen Eigenschaften der Sol-Gel-Beschichtung kann die Verbindung mit einer derartigen organischen Schicht besonders beständig erfolgen. Es hat sich herausgestellt, dass hierfür beispielsweise Epoxid-und/oder Polyurethan-Klebeschichten oder diverse Lackschichten besonders gut geeignet sind. Die Sol-Gel Beschichtung kann somit sowohl als Klebe- als auch als Lackiervorbehandlung einer Oberfläche eines metallischen Substrats dienen.

Werden eine Sol-Gel-Beschichtung aufweisende Oberflächen zweier metallischer Substrate über eine Klebeschicht miteinander verbunden, kann dies besonders fest und gegenüber Korrosion unempfindlich erfolgen.

Die Verwendung der erfindungsgemäßen Mischung auf Wasserbasis mit einem Sol, aufweisend Alkoxysilane mit der allgemeinen chemischen Formel Si(OR)₄ und Organoalkoxysilane mit der allgemeinen chemischen Formel R"Si(OR')₃, wobei R und R' lineare oder verzweigte, kurzkettige Kohlenwasserstoffreste mit wenigstens einer Hydroxylgruppe und R" eine organische Gruppe mit einer Glycidoxy-, Merkapto-, Amino-, Methacryl-, Allyl- und/oder Vinyl-Gruppe ist, eignet sich insbesondere zur Oberflächenbehandlung eines metallischen Substrats, insbesondere eines Blechs, aus Aluminium oder einer Aluminiumlegierung, wobei dieses auch vorteilhaft weiter bearbeitet und/oder behandelt werden kann.

Diese Verwendung kann verbessert werden, indem R und/oder R' ein 2-Hydroxyethylrest und/oder R" ein 3-Glycidoxypropyl-Rest ist.

Im Allgemeinen wird erwähnt, dass besonders bei einem Blech aus einer Aluminiumlegierung (z.B.: der AA 7xxx Gruppe), sich die erwähnten vorteilhaften Eigenschaften einstellen konnten - im Allgemeinen jedoch vorstellbar ist, das erfindungsgemäße Verfahren anzuwenden, um damit ein metallisches Substrat aus Aluminium oder einer Aluminiumlegierung mit einer Oberfläche, aufweisend eine Sol-Gel-Beschichtung, herzustellen.

### Kurze Beschreibung der Zeichnungen

In den Figuren ist der Erfindungsgegenstand beispielsweise anhand eines Ausführungsbeispiels näher dargestellt. Es zeigen
- Fig. 1: eine schematische Darstellung der Strukturformeln der eingesetzten Precursoren sowie des Komplexbildners,
- Fig. 2: eine Draufsicht auf zwei mit einer Mischung mit Organosilanen behandelten Oberflächen von metallischen Substraten und
- Figur 3a und 3b: mikroskopische Aufnahmen einer Draufsicht auf Oberflächen von mit Organosilanen behandelten metallischen Substraten.

### Weg zur Ausführung der Erfindung

Zur erfindungsgemäßen Beschichtung einer Oberfläche einer Aluminiumlegierung wird diese in der Regel zunächst entfettet und/oder gebeizt. Hierfür stehen - abhängig von der Legierungszusammensetzung des metallischen Substrats - Mittel und Mischungen aus alkalischen und sauren Systemen zur Verfügung, beispielsweise auf Basis von Kalilauge oder Schwefelsäure in Kombination mit Fluoriden. Im Ausführungsbeispiel erfolgt dies für Legierungen der AA 7075 Serie durch alkalisches Entfetten mithilfe von Kalilauge und Tensiden. Anschließend wird mit deionisiertem Wasser gespült, woraufhin ein Beizen mit einer Mischung aus Schwefel- und Flusssäure durchgeführt wird. Das Entfetten bzw. Beizen kann beispielsweise mit Hilfe eines Tauch- oder Spritzverfahren (Spritz-Entfettverfahren bzw. Spritz-Beizverfahren) erfolgen. Nach einer weiteren Spülung mit deionisiertem Wasser wird das Blech getrocknet. Heißluft kann sich hierzu eignen oder es können auch andere Trocknungsverfahren verwendet werden, beispielsweise unter Einsatz von Vliesstoffwalzen.

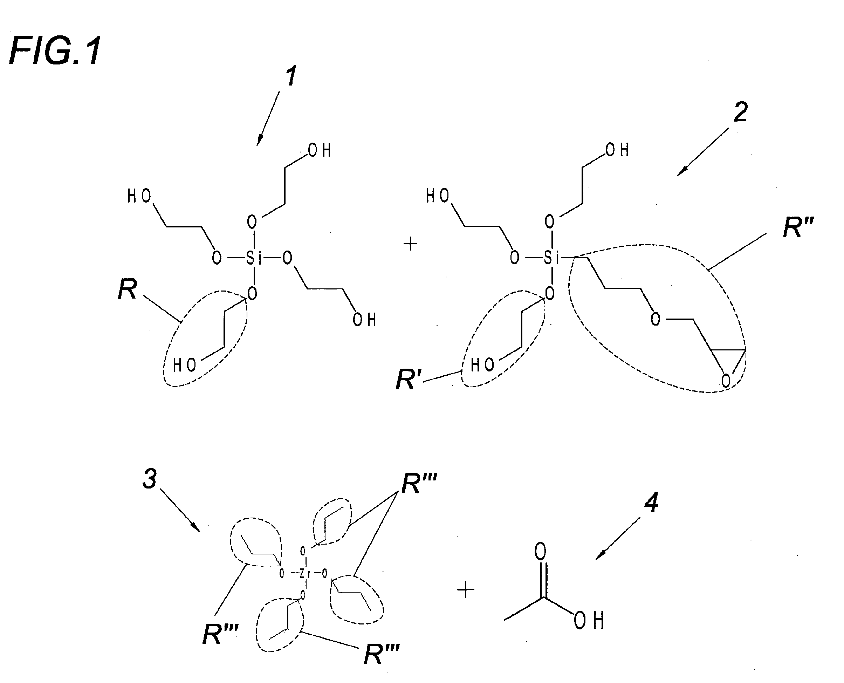

Daran anschließend erfolgt eine Beschichtung der Oberfläche mit einer erfindungsgemäßen Mischung (M_erf) hergestellt aus:
6,2 Gew.-% Tetrakis(2-hydroxyethoxy)silan - in Fig. 1 mit dem Bezugszeichen 1 markiert,
1,3 Gew.-% 3-Glycidoxypropytris(2-hydroxyethoxy)silan - in Fig. 1 mit dem Bezugszeichen 2 markiert,
2,5 Gew.-% Tetra-(n-propyl)zirkonat - in Fig. 1 mit dem Bezugszeichen 3 markiert,
3,2 Gew.-% Essigsäure - in Fig. 1 mit dem Bezugszeichen 4 markiert und Rest Wasser.

Bei der derartigen beispielsweisen Mischung, wobei diese Mischung selbst als Sol gesehen werden kann, stellt sich ein Reaktionsgleichgewicht ein, in welchem etwa 12,5 Gew.-% flüchtige Organik, vorwiegend Ethylenglykol, vorliegen.

Bei Bedarf können der erfindungsgemäßen Mischung (M_erf), um die Verarbeitungseigenschaften des Sols an die jeweiligen Anforderungen anzupassen, verschiedene Additive beigefügt werden. Diese können beispielsweise Benetzungsmittel, Verlaufsmittel, Schaumdämpfungsmittel, Dispergierhilfen oder UV-Stabilisatoren sein. Außerdem können noch verschiedene anorganische oder organische Inhibitoren zur weiteren Steigerung der Korrosionsbeständigkeit zugesetzt werden. Geeignet wären zum Beispiel Mercaptobenzothiazole, Mercaptobenzimidazole, Mg(NO₃)₂, Ce(NO₃)₂ Cr(NO₃)₃ und vergleichbare Substanzen.

Die Aufbringung der Mischung erfolgt durch Tauchbeschichtung, jedoch kann dies, wie bereits erwähnt, auch auf andere Weise ermöglicht werden - die Viskosität dieser Mischung ist nämlich vorteilhaft, sodass ohne Weiteres auch eine Aufbringung mithilfe von Walzen erfolgen kann, was insbesondere bei geforderten großflächigen Beschichtungen vorteilhaft ist.
Eine weitere wesentliche Verbesserung ist, dass die Topfzeit dieser Mischung - je nach Bedingungen bei denen das Verfahren abläuft - bis zu mehrere Stunden beträgt. Im Gegensatz zu bekannten Verfahren stellt dies eine erheblich längere Zeitspanne dar, die das erfindungsgemäße Verfahren klarerweise erleichtert.

Die in weiterer Folge einsetzende Gelierung verläuft mithilfe des Verfahrens wie beschrieben ebenfalls vorteilhaft ab. Das sich ausbildende Gel ist in seinem Aufbau, seiner Vernetzung, Stabilität und im Speziellen auch in seiner Bindung zur metallischen Oberfläche gegenüber dem Stand der Technik entscheidend verbessert. Dies dürfte nicht zuletzt daran liegen, dass im Zuge der Hydrolyse Ethylenglykol gebildet wird, welches sich wie bereits beschrieben erst nach Aufbringen auf das Substrat verflüchtigt, emulgierende Eigenschaften besitzt und zu besserem Verlaufsverhalten der Beschichtung führt. In diesem Zusammenhang sei nochmals auf den Vorteil hingewiesen, dass bis zur Trocknung praktisch keine giftigen und/oder explosiven Dämpfe entweichen.

Die Trocknung kann bei 100 - 200 Grad Celsius Substrattemperatur erfolgen, vorzugsweise 130 Grad Celsius, dabei zeigte sich, dass selbst bei dieser vergleichsweise schnellen Durchführung eine vollständige Bedeckung der Oberfläche durch die ausgehärtete Beschichtung erhalten bleibt. Es ist aber auch vorstellbar, bei niedrigeren Temperaturen zu trocknen, beispielsweise indem eine vergleichsweise hohe Luft-Konvektion gewählt wird. Typischerweise kann die Temperatur 60 Grad Celsius sein - mit Infrarot-Wärmequellen sind durchaus noch niedrigere Temperaturen vorstellbar, was vorteilhaft sein kann, angrenzende andere Materialien, wie zum Beispiel Dichtungen, zu schonen.

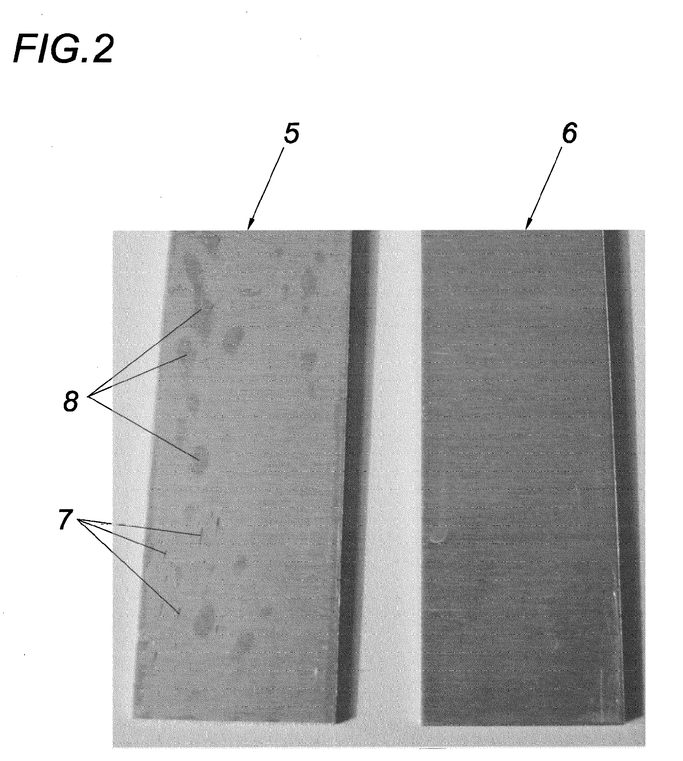

Dies ist anhand von Figur 2 ersichtlich, die zwei beschichtete Bleche 5, 6 der Aluminiumlegierung der AA 7075 zeigt. Das Blech 5 wurde mit einer Mischung des Stands der Technik (M_SdT) von 6 Gew.-% Tetraethoxysilan sowie 1,9 Gew.-% 3-Glycidoxypropyltrimethoxysilan, 1,7 Gew.-% Tetra-(n-Propyl)-Zirkonat und 1,6 Gew.-% Essigsäure sowie Rest Wasser behandelt - während das Blech 6 mit der erfindungsgemäßen Mischung entsprechend diesem Ausführungsbeispiel behandelt wurde. So sind auf der Oberfläche des Blechs 5 bereits mit freiem Auge Risse 7 und Bereiche 8 mit verringerter Dicke der Sol-Gel-Beschichtung erkennbar, während im Gegensatz dazu beim erfindungsgemäß behandelten Blech 6 eine vergleichsweise gleichmäßige, homogene Beschichtung erfolgt. Nachteilig weist die Beschichtung des Blechs 5, also die Oberfläche des Blechs 5, Bereiche 8 und Risse 7 auf, die nicht nur einen verringerten Schutz des Blechs 5 darstellen, sondern auch eine nachfolgende Behandlung/Verarbeitung des Blechs 5 beeinträchtigen. Somit ist auch gezeigt, dass das erfindungsgemäße Verfahren ermöglicht, mithilfe einer vergleichsweise dünnen Beschichtung sicherzustellen, dass die Oberfläche des Blechs 6 vollflächig bedeckt und geschützt ist, was nicht zuletzt die erwähnten Vorteile bei einer eventuell nachfolgenden Lackierung oder bei Verbindung zweier, eine Sol-Gel-Beschichtung aufweisende Oberfläche metallischer Substrate, die über eine Klebeschicht miteinander verbunden sind, nach sich zieht. Dies ist auch insofern von Bedeutung, da die Sol-Gel-Beschichtung mit steigender Dicke geringeren mechanischen Belastungen standhält.

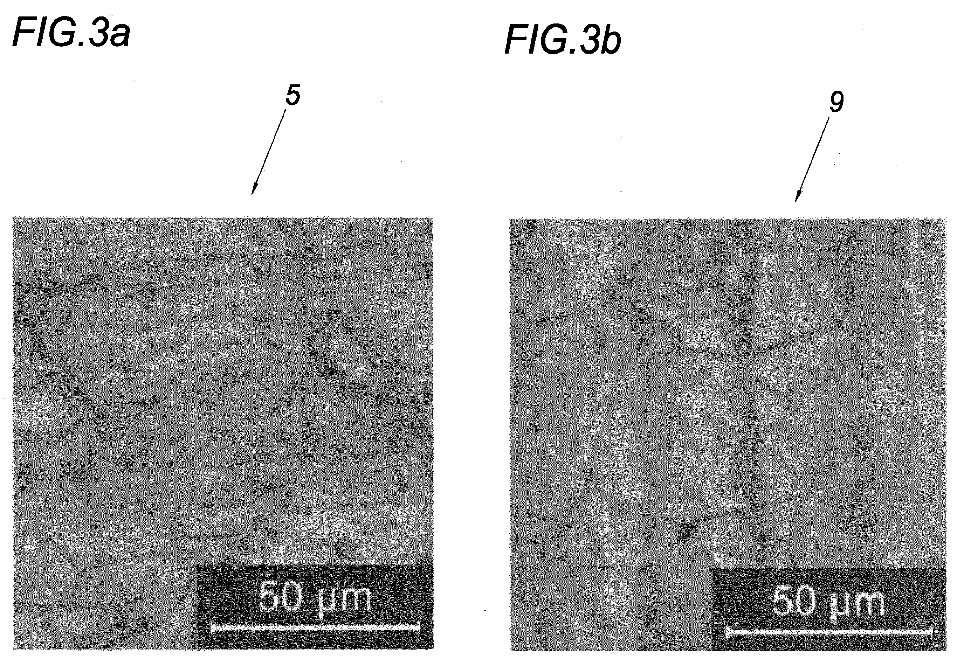

Auch bei mikroskopischen Aufnahmen ist die besonders vorteilhafte Ausbildung der Beschichtung zu erkennen. Dies wird anhand der Figur 3a gezeigt, in welcher über die Beschichtung verlaufende Rissbildungen erkennbar sind, welche jedoch vergleichsweise gleichmäßig verteilt und in ihrer Breite im niedrigen einstelligen µm-Bereich liegen. Entsprechend vorteilhafte Beschichtungen können auch bei einem Blech 9 aus einer 6XXX-Aluminiumlegierung erreicht werden - wie anhand der Figur 3b zu erkennen.

Die genannten Vorteile resultieren in den Ergebnissen einer Überprüfung der Zugscherfestigkeit zeigt, die der Tabelle 1 zu entnehmen sind. Hierzu wurden die Oberflächen von Blechen einer AA7075-Legierung mit oben angeführter Mischung des Stands der Technik (M_SdT) behandelt und diese behandelten Oberflächen mithilfe eines Epoxid-Klebers miteinander verklebt. In gleicher Weise erfolgt dies mit Blechen unter Verwendung der erfindungsgemäßen Mischung (M_erf). Die Bestimmung der Zugscherfestigkeit dieser Überlappungsklebungen erfolgt durch Einwirkung einer Zugkraft, die parallel zur Klebefläche und zur Hauptachse der Bleche wirkt.

**Tabelle1 τₘₐₓ stellt die maximale Kraft pro Fläche dar, der eine überlappende Klebung im Zugscherversuch widersteht.**

| **Beschichtungen** | **τₘₐₓ** [N/mm²] |
|---|---|
| M_SdT | 28.2 |
| M_erf | 32.7 |

Somit kann gezeigt werden, dass die erfindungsgemäße Mischung nicht nur Vorteile hinsichtlich Verarbeitungsmöglichkeit, Umwelt- und Gesundheitsschutz etc. bietet, sondern auch ein metallisches Substrat mit einer besonders vorteilhaften Sol-Gel-Beschichtung erhalten wird, deren Morphologie sich erkennbar und in entscheidender Weise vom Stand der Technik abhebt. Somit wird dargelegt, dass und weshalb die Charakteristik der erfindungsgemäß hergestellten Beschichtung beispielsweise Verbesserungen in Bezug auf die Stärke von Verklebungen zweier behandelter Oberflächen liefern kann.

## Patentansprüche

1. Verfahren zur Behandlung der Oberfläche eines metallischen Substrats aus Aluminium oder einer Aluminiumlegierung umfassend:
Bereitstellung einer Mischung auf Wasserbasis mit einem Sol, aufweisend Alkoxysilane mit der allgemeinen chemischen Formel Si(OR)₄ und Organoalkoxysilane mit der allgemeinen chemischen Formel R"Si(OR')₃, wobei R und R' lineare oder verzweigte, kurzkettige Kohlenwasserstoffreste mit wenigstens einer Hydroxylgruppe und R" eine organische Gruppe mit einer Glycidoxy-, Merkapto-, Amino-, Methacryl-, Allyl- und/oder Vinyl-Gruppe ist,
Aufbringen der Mischung auf die Oberfläche des metallischen Substrats und
wenigstens bereichsweises Aushärten der Mischung unter Ausbildung einer mit dem metallischen Substrat verbundenen Sol-Gel-Beschichtung.

2. Verfahren nach Anspruch 1, **dadurch gekennzeichnet, dass** R ein 2-Hydroxyethylrest ist.

3. Verfahren nach Anspruch 1 oder 2, **dadurch gekennzeichnet, dass** R' ein 2-Hydroxyethylrest ist.

4. Verfahren nach einem der Ansprüche 1 bis 3, **dadurch gekennzeichnet, dass** R" ein 3-Glycidoxypropyl-Rest ist.

5. Verfahren nach einem der Ansprüche 1 bis 4, **dadurch gekennzeichnet, dass** das Sol aufweist:
5 bis 10 Gewichts-% Tetrakis(2-hydroxyethoxy)silan und
0,5 bis 3,5 Gewichts-% 3-Glycidoxypropytris(2-hydroxyethoxy)silan.

6. Verfahren nach einem der Ansprüche 1 bis 5, **dadurch gekennzeichnet, dass** die Mischung säurefrei ist.

7. Verfahren nach einem der Ansprüche 1 bis 5, **dadurch gekennzeichnet, dass** die Mischung zusätzlich Metallalkoxide, insbesondere von Zirkon, Aluminium und/oder Titan, mit der allgemeinen chemischen Formel M(OR'")ₓ aufweist, wobei R"' ein linearer oder verzweigter, kurzkettiger Kohlenwasserstoffrest, insbesondere ein n-Propyl-, iso-Propyl- und/oder n-Butyl-Rest, ist.

8. Verfahren nach Anspruch 7, **dadurch gekennzeichnet, dass** R'" wenigstens eine Hydroxylgruppe aufweist.

9. Verfahren nach Anspruch 7 oder 8, **dadurch gekennzeichnet, dass** die Mischung einen Komplexbildner, insbesondere eine organische Säure und/oder ein ß-Diketon, enthält.

10. Verfahren nach Anspruch 7 bis 9, **dadurch gekennzeichnet, dass** die Mischung aufweist:
0,3 bis 4,5 Gew.-% Metallalkoxide, insbesondere Tetra-(n-propyl)zirkonat oder Tetra-(iso-propyl)titanat und
0,3 bis 9 Gew.-% eines Komplexbildners, insbesondere Essigsäure.

11. Verfahren nach einem der Ansprüche 1 bis 10, **dadurch gekennzeichnet, dass** die Oberfläche der Sol-Gel-Beschichtung mit einer organischen Schicht, insbesondere mit einer Epoxid- und/oder Polyurethan-Klebeschicht oder einer Lackschicht, verbunden wird.

12. Verfahren nach einem der Ansprüche 1 bis 11, **dadurch gekennzeichnet, dass** eine Sol-Gel-Beschichtung aufweisende Oberflächen zweier metallischer Substrate über eine Klebeschicht miteinander verbunden werden.

13. Verwendung einer Mischung auf Wasserbasis mit einem Sol, aufweisend Alkoxysilane mit der allgemeinen chemischen Formel Si(OR)₄ und Organoalkoxysilane mit der allgemeinen chemischen Formel R"Si(OR')₃, wobei R und R' lineare oder verzweigte, kurzkettige Kohlenwasserstoffreste mit wenigstens einer Hydroxylgruppe und R" eine organische Gruppe mit einer Glycidoxy-, Merkapto-, Amino-, Methacryl-, Allyl- und/oder Vinyl-Gruppe ist, zur Oberflächenbehandlung eines metallischen Substrats aus Aluminium oder einer Aluminiumlegierung.

14. Verwendung nach Anspruch 13, **dadurch gekennzeichnet, dass** R und/oder R' ein 2-Hydroxyethylrest und/oder R" ein 3-Glycidoxypropyl-Rest ist.

## Claims

1. A method for treating the surface of a metallic substrate of aluminum or an aluminum alloy, including:
furnishing a water-based mixture having a sol, having alkoxysilanes with a general chemical formula Si(OR)₄ and organoalkoxysilanes having the general chemical formula R"Si(OR')₃, in which R and R' are linear or branched short-chain hydrocarbon radicals with at least one hydroxyl group and R" is an organic group having a glycidoxy, mercapto, amino, methacryl, allyl, and/or vinyl group,
applying the mixture to the surface of the metallic substrate, and
at least regionally hardening the mixture, forming a sol-gel coating bonded to the metallic substrate.

2. The method of claim 1, **characterized in that** R is a 2-hydroxyethyl radical.

3. The method of claim 1 or 2, **characterized in that** R' is a 2-hydroxyethyl radical.

4. The method of one of claims 1 through 3, **characterized in that** R" is a 3-glycidoxypropyl radical.

5. The method of one of claims 1 through 4, **characterized in that** the sol has the following: 5 to 10 weight % tetrakis(2-hydroxyethoxy)silane and 0.5 to 3.5 weight % 3-glycidoxypropytris(2-hydroxyethoxy)silane.

6. The method of one of claims 1 through 5, **characterized in that** the mixture is acid-free.

7. The method of one of claims 1 through 5, **characterized in that** the mixture additionally has metal oxides, in particular of zirconium, aluminum and/or titanium, having the general chemical formula M(OR"')ₓ, in which R'" is a linear or branched short-chain hydrocarbon radical, in particular an n-propyl, isopropyl and/or n-butyl radical.

8. The method of claim 7, **characterized in that** R'" has at least one hydroxyl group.

9. The method of claim 7 or 8, **characterized in that** the mixture contains a complexing agent, in particular an organic acid and/or a β-diketone.

10. The method of claims 7 through 9, **characterized in that** the mixture has:
0.3 to 4.5 weight % metal oxides, in particular tetra-(n-propyl) zirconate or tetra(isopropyl) titanate and
0.3 to 9 weight % of a complexing agent, in particular acetic acid.

11. The method of one of claims 1 through 10, **characterized in that** the surface of sol-gel coating is bonded to an organic layer, in particular having an epoxy and/or polyurethane adhesive layer or a lacquer layer.

12. The method of one of claims 1 through 11, **characterized in that** surfaces, having a sol-gel coating, of two metallic substrates are bonded to one another via an adhesive layer.

13. The use of a water-based mixture with a sol, having alkoxysilanes having the general chemical formula Si(OR)₄ and organoalkoxysilanes having the general chemical formula R"Si(OR')₃, in which R and R' are linear or branched short-chain hydrocarbon radicals with at least one hydroxyl group and R" is an organic group having a glycidoxy, mercapto, amino, methacryl, allyl, and/or vinyl group, for surface treatment of an aluminum or aluminum alloy metallic substrate.

14. The use of claim 13, **characterized in that** R and/or R' is a 2-hydroxyethyl radical and/or R" is a 3-glycidoxypropyl radical.

## Revendications

1. Procédé pour le traitement de la surface d'un substrat métallique en aluminium ou en alliage d'aluminium comprenant :
la préparation d'un mélange à base aqueuse avec un sol contenant des alkoxysilanes de formule chimique générale Si(OR)₄ et des organoalkoxysilanes de formule chimique générale R"Si(OR')₃, où R et R' sont des radicaux hydrocarbonés à chaîne courte linéaires ou ramifiés avec au moins un groupe hydroxyle et R" est un groupe organique avec un groupe glycidoxy, mercapto, amino, méthacryle, allyle et/ou vinyle,
l'application du mélange sur la surface du substrat métallique et
le durcissement au moins par zones du mélange en formant un revêtement sol-gel lié au substrat métallique.

2. Procédé selon la revendication 1, **caractérisé en ce que** R est un radical 2-hydroxyéthyle.

3. Procédé selon la revendication 1 ou 2, **caractérisé en ce que** R' est un radical 2-hydroxyéthyle.

4. Procédé selon une ou plusieurs des revendications 1 à 3, **caractérisé en ce que** R" est un radical 3-glycidoxypropyle.

5. Procédé selon une ou plusieurs des revendications 1 à 4, **caractérisé en ce que** le sol contient:
5 à 10 % en poids de tétrakis(2-hydroxyéthoxy)silane et
0,5 à 3,5 % en poids de 3-glycidoxypropytris(2-hydroxyéthoxy)silane.

6. Procédé selon une ou plusieurs des revendications 1 à 5, **caractérisé en ce que** le mélange ne contient pas d'acides.

7. Procédé selon une ou plusieurs des revendications 1 à 5, **caractérisé en ce que** le mélange contient en outre des oxydes métalliques, en particulier de zirconium, d'aluminium et/ou de titane, de formule chimique générale M(OR"')ₓ, où R'" est un radical hydrocarboné à chaîne courte linéaires ou ramifiés, en particulier un radical n-propyle, isopropyle et/ou n-butyle.

8. Procédé selon la revendication 7, **caractérisé en ce que** R'" contient au moins un groupe hydroxyle.

9. Procédé selon la revendication 7 ou 8, **caractérisé en ce que** le mélange contient un agent complexant, en particulier un acide organique et/ou une β-dicétone.

10. Procédé selon la revendication 7 à 9, **caractérisé en ce que** le mélange contient :
0,3 à 4,5 % en poids d'oxydes métalliques, en particulier de tétrazirconate de n-propyle ou de tétratitanate d'isopropyle, et
0,3 à 9 % en poids d'un agent complexant, en particulier d'acide acétique.

11. Procédé selon une ou plusieurs des revendications 1 à 10, **caractérisé en ce que** la surface du revêtement sol-gel est liée à une couche organique, en particulier à une couche d'adhésif époxy et/ou polyuréthane ou une couche de vernis.

12. Procédé selon une ou plusieurs des revendications 1 à 11, **caractérisé en ce que** les surfaces de deux substrats métalliques portant un revêtement sol-gel sont liées entre elles.

13. Utilisation d'un mélange à base aqueuse avec un sol contenant des alkoxysilanes de formule chimique générale Si(OR)₄ et des organoalkoxysilanes de formule chimique générale R"Si(OR')₃, où R et R' sont des radicaux hydrocarbonés à chaîne courte linéaires ou ramifiés avec au moins un groupe hydroxyle et R" un groupe organique avec un groupe glycidoxy, mercapto, amino, méthacryle, allyle et/ou vinyle, pour le traitement de surface d'un substrat métallique en aluminium ou en alliage d'aluminium.

14. Utilisation selon la revendication 13, **caractérisée en ce que** R et/ou R' sont un radical 2-hydroxyéthyle et/ou R" un radical 3-glycidoxypropyle.
